# EUROPEAN PATENT SPECIFICATION

(11) **EP 4 028 687 B1**
(45) Date of publication and mention of the grant of the patent: **08.11.2023**
(21) Application number: 20786588.2
(22) Date of filing: 09.09.2020
(51) Int. Cl.: F16P 1/02, F16P 3/02, B23B 13/00, B23B 13/02

(54) **COVERING DEVICE FOR AN APPARATUS FOR FEEDING BARS TO A MACHINE TOOL**
ABDECKVORRICHTUNG FÜR EINE VORRICHTUNG ZUM ZUFÜHREN VON STANGEN ZU EINER WERKZEUGMASCHINE
DISPOSITIF DE RECOUVREMENT POUR UN APPAREIL D'ALIMENTATION EN BARRES D'UNE MACHINE-OUTIL

(30) Priority: 10.09.2019 IT 201900016028
(43) Date of publication of application: 20.07.2022
(73) Proprietor: Cucchi Giovanni & C. S.r.l., 20041 Bussero (IT)
(72) Inventor: CUCCHI, Cesare, I-20041 Bussero, Milano (IT)
(74) Representative: Luppi Intellectual Property S.r.l.
(86) International application number: PCT/IB2020/058372
(87) International publication number: WO 2021/048755

(56) References cited:
- FR-A- 1 074 458
- GB-A- 784 407
- GB-A- 2 256 452
- IT-A1- MO20 110 176
- US-A- 3 321 100
- US-A1- 2006 153 666
- US-A1- 2016 158 845
- Cucchi Giovanni e C. srl: "Cucchi Giovanni Company VBR25 compressor", YouTube, 12 March 2019 (2019-03-12), page 1 pp., XP054980439, Retrieved from the Internet: URL:https://www.youtube.com/watch?v=73rtuN EApsw [retrieved on 2020-05-05]

## Description

### BACKGROUND OF THE INVENTION

The present invention relates to a covering device for an apparatus for automatic feeding to a machine tool, such as a lathe that can be of the single spindle or multispindle type.

### STATE OF THE ART

Apparatuses for feeding bars are known that are used for feeding and advancing the latter to machine tools like lathes.

An apparatus for feeding bars for known type comprises a support frame, to which a drum is fitted that is provided with a plurality of guides for respective bars, a pusher suitable for pushing backwards and advancing one bar at a time to the machine tool, and other components.

The aforesaid apparatus, also known by the term feeding apparatus, has some limits set out above.

A first drawback is the ineffective and poor covering and protection of the area around the feeding apparatus, which implies, in general, hazards for operators around the apparatus.

For example, during operation of the feeding apparatuses, waste chip elements from the bar being machined can be formed that, accelerated by the machine, are ejected at random around the machining area, with the risk of injuring the operator.

Further, the friction between bars and the apparatus or between the various components of the apparatus can generate unpleasant and loud noises that over the long term can cause damage to the hearing of operators. Accordingly, making operators as safe as possible, also through suitable physical and acoustic protective equipment, is one of the main objectives of the designers of these apparatuses.

Correct protection of the device not only reduces or eliminates possible risks to the health of the operators but is also used to protect the apparatus from possible mechanical damage. More precisely, it is necessary to prevent outer agents like chips, dirt, dust or liquids entering between the delicate mechanisms of the apparatus, in order to ensure as far as possible correct operation of the device, prevent the risk of malfunctions due to wear and prolong working life as long as possible.

Current feeding apparatuses are further not completely satisfactory in terms of loading and accessibility. The actions of feeding bars on the apparatus are rather difficult; in addition, it is very complex to access mechanisms inside the apparatus in the event of inspecting and controlling correct operation thereof and in the event of routine or special maintenance.

Generally, bar-feeding apparatuses are heavy and bulky systems, which are hardly adaptable in terms of positioning inside industrial premises and coupling with the machine tool to which the bars are fed. Further, once correct adjustment has been found following installation, known bar-feeding apparatuses cannot be moved because of the great weight, or anyway a movement thereof is very complex. It is thus necessary to make the design of apparatuses more easily adaptable to the machine tools used during the installation step and to the space available in the stores and which fitting is easier and less onerous.

Other covering devices are known from FR1074458, US3321100 e GB2256452.

FR 1074458 in particular discloses an example of a covering device in accordance with the preamble of claim 1.

For the above reasons, it is thus considered that there is currently significant room for improvement regarding current bar loading apparatuses and the current protection and cover devices, in particular in terms of adaptability, versatility, accessibility, efficacy and safety for operators.

### OBJECTS OF THE INVENTION

An object of the present invention is to improve current bar feeding apparatuses, in particular the cover devices for feeding apparatuses.

Another object of the present invention is to provide a covering device for a feeding apparatus for a machine tool that is simple and cheap to use, structurally simplified and able to operate effectively in any operating condition and solve the aforesaid limits of the prior art.

Another object of the present invention is to improve the current protection and cover devices of bar-feeding apparatuses for feeding bars onto machine tools, in order to reduce as much as possible the risks to the health of the operators and damage to bar loading apparatuses.

Another object of the present invention is to make the bar-feeding apparatus more adaptable and effective, in relation to the available use and space.

### SHORT DESCRIPTION OF THE INVENTION

The above can be achieved by a covering device for an apparatus for feeding bars to a machine tool as defined in the attached claims.

Owing to the invention, the aforesaid drawbacks are overcome.

In particular, the device according to the invention, with a very simple structural configuration, enables great versatility and better adaptability and efficacy of the apparatus to be provided, by also increasing levels of safety for operators.

Further features and advantages will be clear from the appended claims and the description together with the attached drawings.

### SHORT DESCRIPTION OF THE DRAWINGS

The invention can be understood better and implemented with reference to the attached drawings, which illustrate an non-limiting embodiment thereof by way of example, wherein:

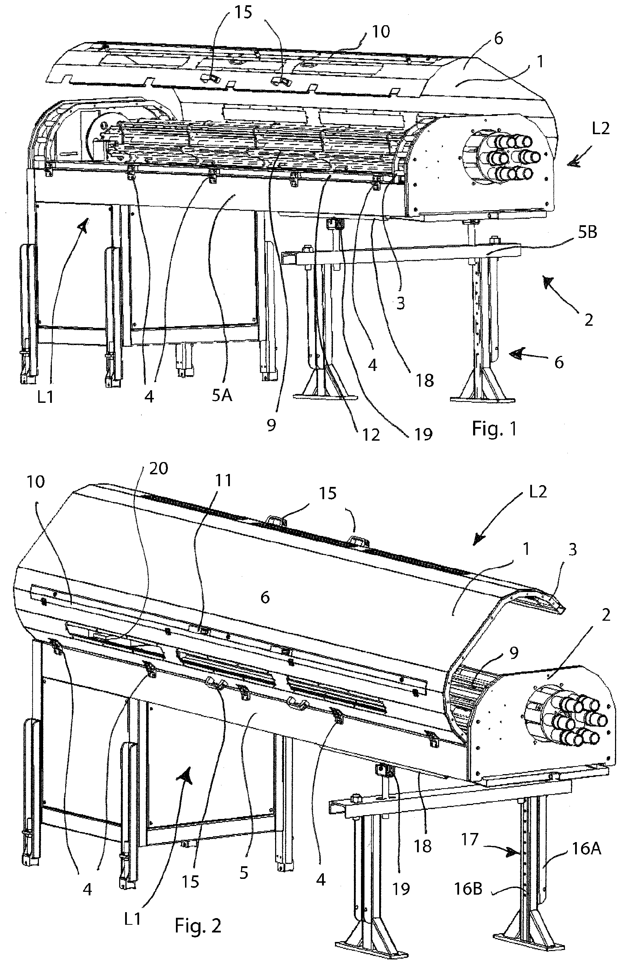

Figure 1 is a perspective view of the covering device, fitted to a bar-feeding apparatus, in a first open configuration;
Figure 2 is a perspective view of the covering device, in a second open configuration;

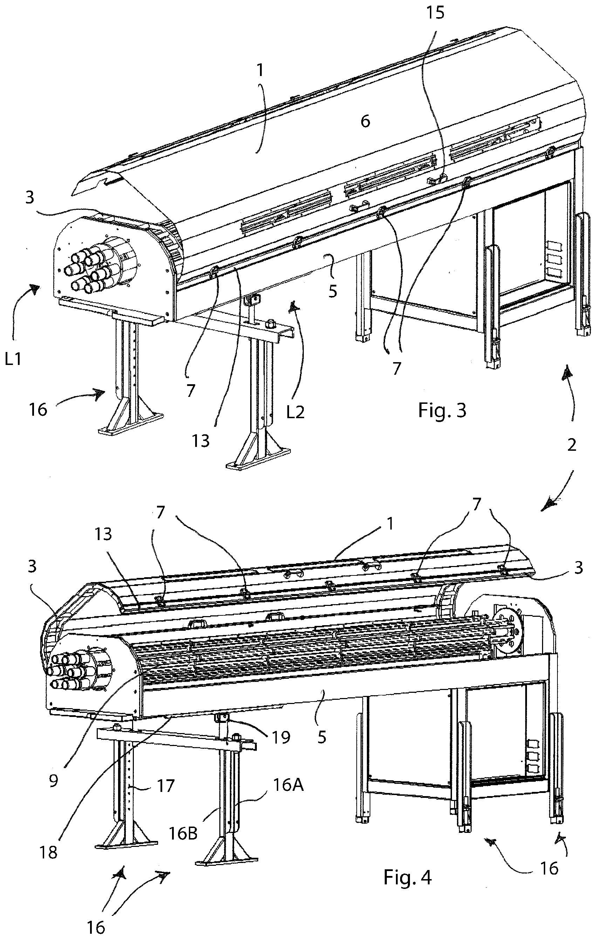

Figure 3 is a perspective view of the covering device from a different angle, in the first open configuration of Figure 1;
Figure 4 is a perspective view of the covering device from a different angle, in the second open configuration of Figure 2;

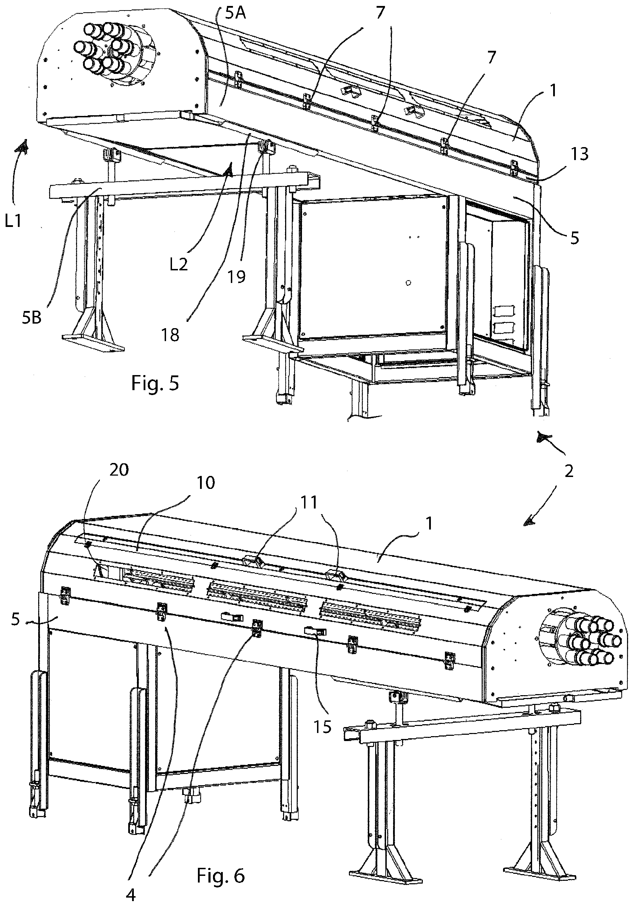

Figure 5 is a bottom perspective view, that shows the lower part of the bar-feeding apparatus provided with the covering device according to the invention;
Figure 6 is a perspective view of the covering device in the closed configuration;

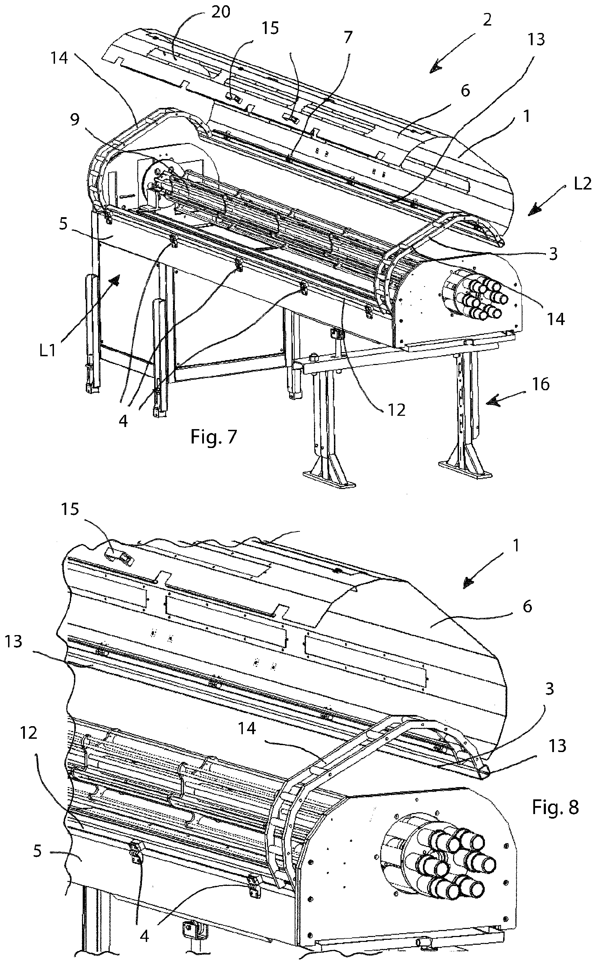

Figure 7 is a perspective view of the covering device in a position that is such as to show better a support frame thereof;
Figure 8 is an enlarged view of a portion of Figure 7;

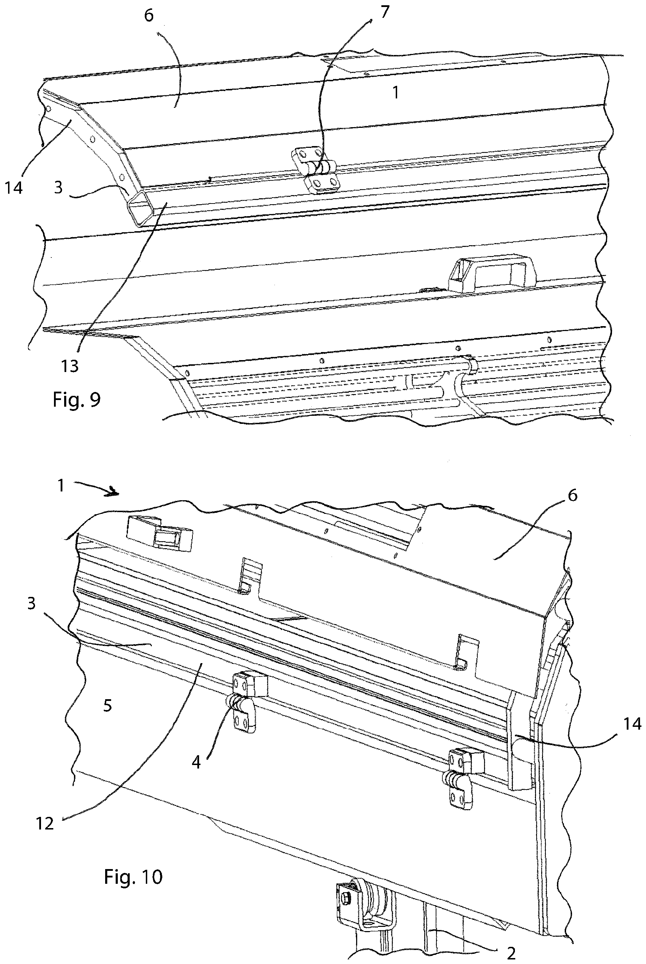

Figure 9 is an enlarged view of a portion of the covering device shown in Figure 4;
Figure 10 is an enlarged view of a portion of the covering device in which first hinge elements of the covering device according to the invention are more visible;

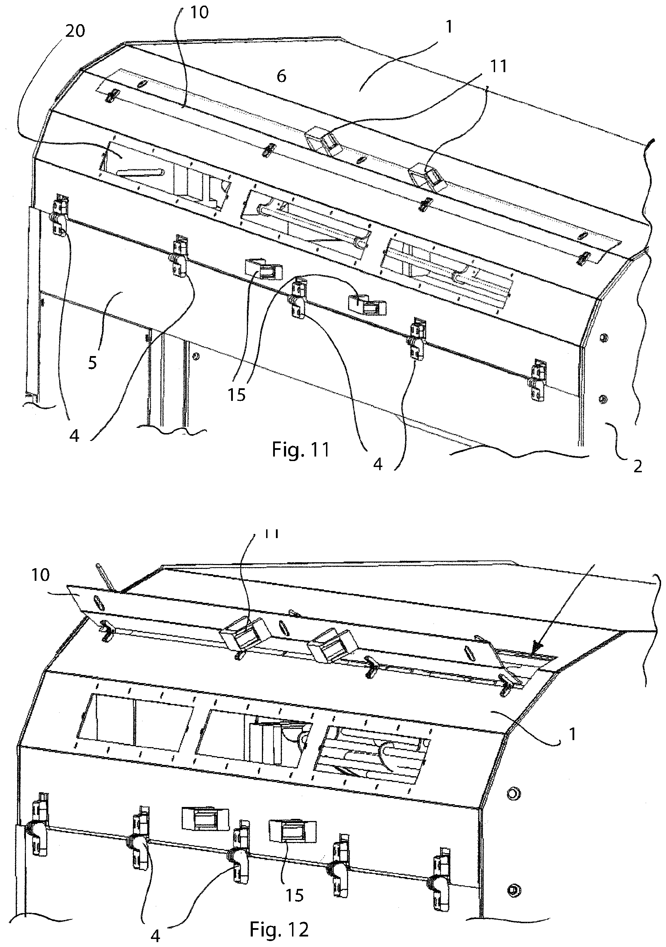

Figure 11 is an enlarged view of a portion of Figure 6;
Figure 12 is a perspective and interrupted view of the covering device in closed configuration, in which a door in open position is visible;

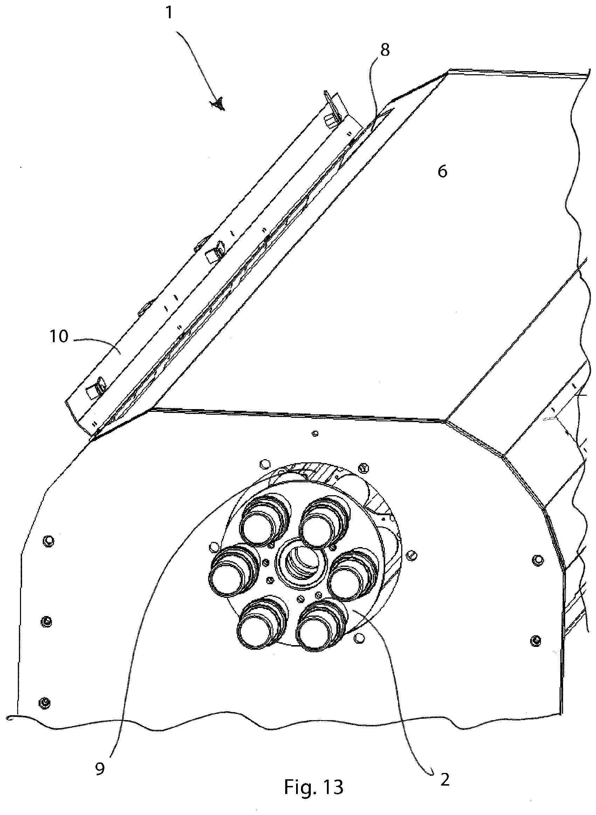

Figure 13 is a perspective and interrupted view, according to a different angle, of the covering device according to the invention, in closed configuration, and with the door in the open position.

### DETAILED DESCRIPTION OF THE INVENTION

With reference to the attached figures, a covering device 1 is shown fitted to an apparatus 2 for automatic feeding of bars to a machine tool, in particular to a lathe that can be of the single spindle type or multispindle type.

The base structure of the covering device 1 consists of a support frame 3, consisting of a first longitudinal tubular element 12, a second longitudinal tubular element 13 and shaped transverse elements 14.

The first longitudinal tubular element 12 is rotatably connectable, by first hinge elements 4, to a first portion of a frame structure 5 of the feeding apparatus 2, in particular on a first longitudinal side L1.

The second longitudinal tubular element 13 is positioned at a second longitudinal side L2, parallel to and opposite the first side L1 of the frame structure 5.

The first longitudinal tubular element 12 and the second longitudinal tubular element 13 are mutually parallel to and separated by a distance that is substantially equal to the width of the feeding apparatus 2.

The second longitudinal tubular element 13, located at the second longitudinal side L2, is not connected to the frame structure 5 but, in particular, is shaped for resting on or being removed from, a second portion of said frame structure 5, opposite and parallel to the aforementioned first portion to which, on the other hand, the first longitudinal tubular element 12 hinged.

The shaped transverse elements 14 complete the support frame 3, extending at short sides of the frame structure 5. More precisely, the shaped transverse elements 14 connect the ends of the first tubular element 12 to the respective ends of the second longitudinal tubular element 13.

On the support frame 3, a cover element 6 comes to rest that is rotatably connected by second hinge elements 7 to the second tubular element 13 and thus to the support frame 3.

The cover element 6 extends and is configured so as to cover completely above the volume defined in the apparatus 2 inside which a bar-feeding drum 9 and the remaining mechanical components are housed. The thus configured cover element 6 thus ensures complete protection of the operators and of the apparatus 2.

As disclosed above, the first hinge elements 4 and the second hinge elements 7 are thus arranged on the respective longitudinal sides L1 and L2 opposite one another of the support frame 3. Owing to this configuration, it is possible to open the covering device 1 on both sides of said feeding apparatus 2. In other words, advantageously, it is possible to choose indifferently in a desired manner from which side to open the covering device 1 to access the components inside the feeding apparatus 2.

The cover element 6 is provided with breaks that are suitably distributed and obtained in zones that are intended to be superimposed, in the closed position, on the corresponding first hinge elements 4, so that the cover element 6 can completely cover the first longitudinal tubular element 12, without the first hinge elements 4 being an obstacle to closing.

The number of breaks depends on the length of the frame structure 5 and on the number of first hinge elements 4.

The cover element 6 comprises respective movement handles 15 on both the longitudinal sides L1/L2, to permit raising and lowering thereof by an operator. One or more pneumatic or hydraulic pistons can be provided to facilitate and assist manual opening and closing of the device 1.

To sum up, it is possible to raise the cover element 6 from both sides L1/L2 of the frame structure 5 of the apparatus 2.

From the longitudinal side L1, it is possible to lift exclusively the cover element 6 (constrained on the frame 3 but not on the first longitudinal tubular element 12), whereas from the longitudinal side L2 it is possible to raise the support frame 3 and the mutually coupled cover element 6 (constrained on the second longitudinal tube 13).

The cover element 6 comprises one or more protection and insulation panels that can possibly consist of sheet metal, polycarbonate or another suitable material.

In order to improve protection from acoustic pollution, the panels that make up the cover element 6 can comprise several layers, between which an acoustic insulating material is interposed.

The cover element 6 can possibly comprise one or more protection and insulation panels made of transparent material or window zones 20 are provided to make the inside of the apparatus 2 visible; in this manner, an operator can inspect the status and operation of the apparatus 2 in safety without having to raise the cover element 6.

On the cover element 6 a slit opening 8 is obtained that extends longitudinally, configured to enable bars to move from external auxiliary storage to the drum 9 of the feeding apparatus 2.

In order to open and close the slit 8, on the cover element 6 a door 10 is hinged that is provided with handles 11, to facilitate the operations of opening and closing the door 10.

Owing to the slit 8, it is possible to introduce the bars into the feeder, whilst keeping operators safe and protected from noise and/or potential bodies that may accidentally detach and be projected outside the feeding apparatus 2.

The frame structure 5 of the apparatus 2 consists of an upper part 5A, which houses the previously disclosed drum 9 and covering device 1, and a base portion 5B that includes legs 16.

The upper part 5A rests on said basement portion 5B by a coupling that includes relatively mobile rail elements 18 and wheels 19.

Owing to the aforesaid coupling, the upper part 5A is adjustable, in a longitudinal direction, with respect to said basement portion 5B, to meet as well as possible every specific installation need and adapt to the available need and to the machine tool used.

The legs 16 of the frame structure 5, in particular, are height-adjustable legs, each of which is made of two pieces 16A, 16B mutually fixed by means of screw elements 17 to enable the mutual fixing position thereof to be adjusted. In this manner, during assembly of the apparatus 2, before actual commissioning, it is possible to decide the actual height of the apparatus 2 owing to the adjustable legs 16 and the longitudinal position owing to the binary system 18 and wheels 19.

As can be seen from what has been disclosed, the covering device 1 enables the objects disclosed above to be reached.

In particular, owing to the invention a covering device 1 is provided that is very versatile and easy to use that is able ensure effective protection and at the same time make feeding bars to the apparatus easier and access to the inner parts from any side extremely easy.

Further, owing to the particular structure of the frame, the apparatus is more easily adaptable both in terms of height and the longitudinal position.

The possibility of raising the covering device 1 by acting on different zones thereof improves the versatility and adaptability and of the apparatus 2 to which it is fitted.

It is possible to configure and size the device 1 in a desired manner according to the applications to which it can be intended, and the materials used for making the device 1 can be chosen according to need provided that the need is compatible with the specific use for which they are intended.

Lastly, variations on and/or additions to what has been described and illustrated in the attached drawings are possible.

## Claims

1. Covering device (1) for an apparatus (2) for feeding bars to a machine tool, comprising:
- a support frame (3), rotatably connectable, by first hinge elements (4), to a frame structure (5) of said feeding apparatus (2),
- a cover element (6) rotatably connected, by second hinge elements (7), to said support frame (3),
- said first hinge elements (4) and said second hinge elements (7) being arranged on respective longitudinal sides (L1, L2) opposite each other of said support frame (3) and being configured to allow the opening of said covering device (1) on both sides of said feeding apparatus (2),
**CHARACTERIZED IN THAT** on said cover element (6) a slit opening (8) is obtained that extends longitudinally and is configured to allow passage and introduction of bars from an external auxiliary storage to a drum (9) of said feeding apparatus (2).

2. Covering device (1) according to claim 1, wherein said cover element (6) consists of one or more protection and insulation panels.

3. Covering device (1) according to claim 1 or 2, wherein on said cover element (6) a door (10) is hinged, with handles (11), configured to open and close said slit opening (8).

4. Covering device (1) according to any preceding claim, wherein said support frame (3) comprises a first longitudinal tubular element (12), connected by said first hinge elements (4), on a first longitudinal side (L1), to a first portion of said frame structure (5), and a second longitudinal tubular element (13), separated and shaped to rest on, or be moved away from, a second portion of said frame structure (5), opposite said first portion at a second longitudinal side (L2), to said second longitudinal tubular element (13) being connected, by said second hinge elements (7), said cover element (6).

5. Covering device (1) according to claim 4, wherein said support frame (3) comprises at opposite sides, at short sides, transverse elements (14) which extend from said first longitudinal tubular element (12) to said second longitudinal tubular element (13) and on which said cover element (6) rests.

6. Covering device (1) according to any preceding claim, wherein said cover element (6) consists of one or more protection and insulation panels, made of sheet metal or polycarbonate or other suitable material.

7. Covering device (1) according to any preceding claim, wherein said cover element (6) consists of one or more protection and insulation panels made of transparent material or comprising window areas (20) to make the inside of said apparatus (2) visible.

8. Covering device (1) according to claims 6 or 7 wherein said panels comprise several layers between which an acoustic insulation material is interposed.

9. Covering device (1) according to any preceding claim, comprising respective movement handles (15) for lowering/lifting said cover element (6) and one or more pneumatic or hydraulic pistons to facilitate and assist opening and closing of the device (1).

10. Apparatus (2) for feeding bars to a machine tool, comprising a covering device (1) according to any preceding claim, wherein said frame structure (5) comprises height-adjustable legs (16), each leg (16) being made of two pieces (16A, 16B) mutually fixed by means of screw elements (17) to enable the mutual fixing position thereof to be adjusted.

11. Apparatus (2) according to the preceding claim, wherein said frame structure (5) consists of an upper part (5A) which houses said drum (9) and said covering device (1), and a basement portion (5B) which includes said legs (16), said upper part (5A) being adjustable in a longitudinal position with respect to said basement portion (5B).

12. Apparatus according to the preceding claim, wherein said upper part (5A) rests on said basement portion (5B) by means of a coupling which includes a rail (18) and relatively movable wheels (19).

## Patentansprüche

1. Abdeckvorrichtung (1) für eine Einrichtung (2) zum Zuführen von Stangen zu einer Werkzeugmaschine, umfassend:
- einen Tragrahmen (3), der über erste Scharnierelemente (4) drehbar mit einer Rahmenstruktur (5) der Zuführeinrichtung (2) verbunden werden kann,
- ein Deckelelement (6), das über zweite Scharnierelemente (7) drehbar mit dem Tragrahmen (3) verbunden ist,
- wobei die ersten Scharnierelemente (4) und die zweiten Scharnierelemente (7) an jeweiligen Längsseiten (L1, L2) des Tragrahmens (3) einander gegenüberliegend eingerichtet und so konfiguriert sind, dass sie das Öffnen der Abdeckvorrichtung (1) an beiden Seiten der Zuführeinrichtung (2) ermöglichen,
**DADURCH GEKENNZEICHNET, DASS** an dem Deckelelement (6) eine Schlitzöffnung (8) erhalten wird, die sich in Längsrichtung erstreckt und so konfiguriert ist, dass sie den Durchtritt und das Einführen von Stangen aus einem externen Hilfsspeicher zu einer Trommel (9) der Zuführeinrichtung (2) ermöglichen.

2. Abdeckvorrichtung (1) nach Anspruch 1, wobei das Deckelelement (6) aus einer oder mehreren Schutz- und Isolierplatten besteht.

3. Abdeckvorrichtung (1) nach Anspruch 1 oder 2, wobei an dem Deckelelement (6) eine Tür (10) angelenkt ist, mit Griffen (11), die konfiguriert ist, um die Schlitzöffnung (8) zu öffnen und zu schließen.

4. Abdeckvorrichtung (1) nach einem vorstehenden Anspruch, wobei der Tragrahmen (3) ein erstes längliches rohrförmiges Element (12) umfasst, das über die ersten Scharnierelemente (4) auf einer ersten Längsseite (L1) mit einem ersten Abschnitt der Rahmenstruktur (5) verbunden ist, und ein zweites längliches rohrförmiges Element (13), das getrennt und so geformt ist, dass es auf einem zweiten Abschnitt der Rahmenstruktur (5), der dem ersten Abschnitt auf einer zweiten Längsseite (L2) gegenüberliegt, ruhen oder von diesem weg bewegt werden kann, wobei das zweite längliche rohrförmige Element (13) über die zweiten Scharnierelemente (7) mit dem Deckelelement (6) verbunden ist.

5. Abdeckvorrichtung (1) nach Anspruch 4, wobei der Tragrahmen (3) auf gegenüberliegenden Seiten, auf kurzen Seiten, Querelemente (14) umfasst, die sich von dem ersten länglichen rohrförmigen Element (12) zu dem zweiten länglichen rohrförmigen Element (13) erstrecken und auf denen das Deckelelement (6) ruht.

6. Abdeckvorrichtung (1) nach einem vorstehenden Anspruch, wobei das Deckelelement (6) aus einer oder mehreren Schutz- und Isolierplatten besteht, die aus Blech oder Polycarbonat oder einem anderen geeigneten Material hergestellt sind.

7. Abdeckvorrichtung (1) nach einem vorstehenden Anspruch, wobei das Deckelelement (6) aus einer oder mehreren Schutz- und Isolierplatten besteht, die aus transparentem Material hergestellt sind oder Fensterbereiche (20) umfassen, um das Innere der Einrichtung (2) sichtbar zu machen.

8. Abdeckvorrichtung (1) nach den Ansprüchen 6 oder 7, wobei die Platten mehrere Schichten umfassen, zwischen denen ein akustisches Isoliermaterial eingefügt ist.

9. Abdeckvorrichtung (1) nach einem vorstehenden Anspruch, die jeweilige Bewegungsgriffe (15) zum Absenken/Anheben des Deckelelements (6) und einen oder mehrere pneumatische oder hydraulische Kolben umfasst, um das Öffnen und Schließen der Vorrichtung (1) zu erleichtern und zu unterstützen.

10. Einrichtung (2) zum Zuführen von Stangen zu einer Werkzeugmaschine, die eine Abdeckvorrichtung (1) nach einem vorstehenden Anspruch umfasst, wobei die Rahmenstruktur (5) höhenverstellbare Beine (16) umfasst, wobei jedes Bein (16) aus zwei Teilen (16A, 16B) hergestellt ist, die mittels Schraubenelementen (17) aneinander befestigt sind, um das Einstellen ihrer Befestigungsposition zueinander zu ermöglichen.

11. Einrichtung (2) nach dem vorstehenden Anspruch, wobei die Rahmenstruktur (5) aus einem oberen Teil (5A), in dem die Trommel (9) und die Abdeckvorrichtung (1) untergebracht sind, und einem Sockelabschnitt (5B) besteht, der die Beine (16) beinhaltet, wobei der obere Teil (5A) in Bezug auf den Sockelabschnitt (5B) in einer Längsposition einstellbar ist.

12. Einrichtung nach dem vorstehenden Anspruch, wobei der obere Teil (5A) mittels einer Kopplung, die eine Schiene (18) und relativ bewegliche Räder (19) beinhaltet, auf dem Sockelabschnitt (5B) ruht.

## Revendications

1. Dispositif de recouvrement (1) pour un appareil (2) d'alimentation en barres d'une machine-outil, comprenant :
- un châssis de support (3), pouvant être relié en rotation, par des premiers éléments charnières (4), à une structure de châssis (5) dudit appareil d'alimentation (2),
- un élément couvercle (6) relié en rotation, par des seconds éléments charnières (7), audit châssis de support (3),
- lesdits premiers éléments charnières (4) et lesdits seconds éléments charnières (7) étant agencés sur des côtés longitudinaux (L1, L2) respectifs opposés l'un à l'autre dudit châssis de support (3) et étant configurés pour permettre l'ouverture dudit dispositif de recouvrement (1) des deux côtés dudit appareil d'alimentation (2),
**CARACTÉRISÉ EN CE QUE** sur ledit élément couvercle (6) est obtenue une ouverture en fente (8) qui s'étend longitudinalement et est configurée pour permettre le passage et l'introduction de barres depuis un stockage auxiliaire externe vers un tambour (9) dudit appareil d'alimentation (2).

2. Dispositif de recouvrement (1) selon la revendication 1, dans lequel ledit élément couvercle (6) consiste en un ou plusieurs panneaux de protection et d'isolation.

3. Dispositif de recouvrement (1) selon la revendication 1 ou 2, dans lequel sur ledit élément couvercle (6), une porte (10) est articulée, avec des poignées (11), configurée pour ouvrir et fermer ladite ouverture en fente (8).

4. Dispositif de recouvrement (1) selon une quelconque revendication précédente, dans lequel ledit châssis de support (3) comprend un premier élément tubulaire longitudinal (12), relié par lesdits premiers éléments charnières (4), sur un premier côté longitudinal (L1), à une première partie de ladite structure de châssis (5), et un second élément tubulaire longitudinal (13), séparé et formé pour reposer sur, ou être éloigné de, une seconde partie de ladite structure de châssis (5), à l'opposé de ladite première partie au niveau d'un second côté longitudinal (L2), ledit second élément tubulaire longitudinal (13) étant relié, par lesdits seconds éléments charnières (7), audit élément couvercle (6).

5. Dispositif de recouvrement (1) selon la revendication 4, dans lequel ledit châssis de support (3) comprend sur des côtés opposés, sur des côtés courts, des éléments transversaux (14) qui s'étendent dudit premier élément tubulaire longitudinal (12) audit second élément tubulaire longitudinal (13) et sur lesquels repose ledit élément couvercle (6).

6. Dispositif de recouvrement (1) selon une quelconque revendication précédente, dans lequel ledit élément couvercle (6) consiste en un ou plusieurs panneaux de protection et d'isolation, en tôle ou en polycarbonate ou autre matériau approprié.

7. Dispositif de recouvrement (1) selon une quelconque revendication précédente, dans lequel ledit élément couvercle (6) consiste en un ou plusieurs panneaux de protection et d'isolation en matériau transparent ou comprenant des zones de fenêtre (20) pour rendre visible l'intérieur dudit appareil (2).

8. Dispositif de recouvrement (1) selon les revendications 6 ou 7, dans lequel lesdits panneaux comprennent plusieurs couches entre lesquelles est interposé un matériau d'isolation acoustique.

9. Dispositif de recouvrement (1) selon une quelconque revendication précédente, comprenant des poignées de mouvement (15) respectives pour abaisser/soulever ledit élément couvercle (6) et un ou plusieurs pistons pneumatiques ou hydrauliques pour faciliter et assister l'ouverture et la fermeture du dispositif (1).

10. Appareil (2) pour alimenter en barres une machine-outil, comprenant un dispositif de recouvrement (1) selon une quelconque revendication précédente, dans lequel ladite structure de châssis (5) comprend des pieds réglables en hauteur (16), chaque pied (16) étant constitué de deux pièces (16A, 16B) fixées mutuellement au moyen d'éléments de vissage (17) pour permettre à la position de fixation mutuelle de celles-ci d'être réglée.

11. Appareil (2) selon la revendication précédente, dans lequel ladite structure de châssis (5) consiste en une partie supérieure (5A) qui loge ledit tambour (9) et ledit dispositif de recouvrement (1), et une partie de base (5B) qui inclut lesdits pieds (16), ladite partie supérieure (5A) étant réglable en position longitudinale par rapport à ladite partie de base (5B).

12. Appareil selon la revendication précédente, dans lequel ladite partie supérieure (5A) repose sur ladite partie de base (5B) au moyen d'un accouplement qui inclut un rail (18) et des roues relativement mobiles (19).
